# EUROPEAN PATENT APPLICATION

(11) **EP 2 903 193 A1**
(43) Date of publication of application: **05.08.2015**
(21) Application number: 13840881.0
(22) Date of filing: 22.09.2013
(51) Int. Cl.: H04L 1/00, H04L 1/16, H04W 72/12

(54) **CHANNEL STATE INFORMATION PROCESSING METHOD, DEVICE AND SYSTEM**

(30) Priority: 29.09.2012 CN 201210371536
(71) Applicant: ZTE Corporation, Shenzhen, Guangdong 518057 (CN)
(72) Inventor: WU, Shuanshuan, Shenzhen Guangdong 518057 (CN); YUAN, Ming, Shenzhen Guangdong 518057 (CN); YANG, Jin, Shenzhen Guangdong 518057 (CN); LIANG, Feng, Shenzhen Guangdong 518057 (CN)
(74) Representative: Markfort, Iris-Anne Lucie
(86) International application number: PCT/CN2013/083951
(87) International publication number: WO 2014/048282

(57) **Abstract**

A method, apparatus and system for processing channel state information are provided. The second channel state information of a second link is sent to a network node via a first link, wherein the first is a cellular communication link from a first device to the network node, and the second link is a D2D communication link between the first device and a second device capable of communicating with the first device. The transmission of channel state information is implemented during D2D communication in a cellular communication system, a criterion for scheduling D2D communication is consequentially provided, and the resource utilization rate of D2D communication is guaranteed. Moreover, the compatibility of D2D communication with cellular communication is achieved without obviously increasing the complexity of implementation and design of UE.

## Description

### TECHNICAL FIELD

The disclosure relates to the field of communications, and in particular to a method, an apparatus and a system for processing channel state information.

### BACKGROUND

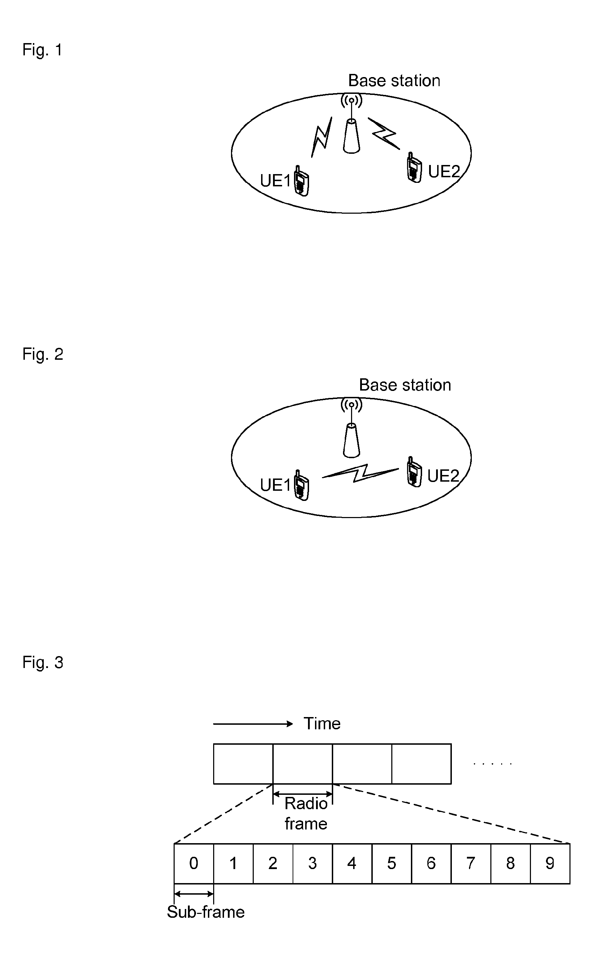

A cellular communication system realizes the multiplexing of limited spectrum resources and promotes the flourish of radio communication technologies. In a cellular communication system, when a service needs to be transmitted between two User Equipment (UE), service data to be transmitted from User Equipment 1 (UE1) to User Equipment 2 (UE2) is first transmitted to base station 1 via an air interface, the base station 1 transmits service data to base station 2 via a core network, and then the base station 2 transmits the service data to the UE2 via an air interface. As shown in Fig. 1, when the UE1 and the UE2 are located in the same cell, although the base station 1 and the base station 2 are the same station, two parts of wireless spectrum resources are consumed in a single data transmission process.

It can be known from above that the foregoing cellular communication method is not the optimal choice when user equipment 1 and 2 are located in the same cell and adjacent to each other. Actually, as mobile communication services become increasingly diversified, an increasing number of services are being transmitted between adjacent users. Thus, a Device-to-Device (D2D) communication mode is getting more and more attention. The D2D (as shown in Fig. 2) refers to the direct transmission of service data from source UE to target UE via an air interface, without involving data forwarding by a base station. Different from the communication mode in the conventional cellular communication system, this communication mode not only saves wireless spectrum resources but also reduces the data transmission workload of a core network for users communicating with each other at a near distance.

In cellular communication, one of the criteria for scheduling is channel state. That is, a Reference Signal (RS) is transmitted between a receiving terminal and a sending terminal, the Channel State Information (CSI) of a link between a network node and UE is obtained according to the measurement on the reference signal, and the obtained CSI is used as a criterion for scheduling. Generally, the reference signal is also called pilot.

It is also needed to schedule service transmission when D2D communication is introduced in a cellular communication system. That is, when pieces of UE are scheduled for D2D communication, the channel state information of a link between the pieces of UE is needed as a criterion for the scheduling. No specific solutions have been proposed to implement the transmission of channel state information in a system supporting D2D communication.

### SUMMARY

To this end, the embodiments of the disclosure provide a method, a device and a system for processing channel state information to implement the transmission of channel state information in a communication system supporting D2D communication.

To achieve the purpose above, the technical solutions of the disclosure are as follows.

A method for processing channel state information includes:
sending second channel state information of a second link to a network node via a first link, wherein the first link is a cellular communication link from a first device to the network node, and the second link is a D2D communication link between the first device and a second device capable of communicating with the first device.

In an embodiment, the second channel state information is transmitted via a transmission resource for first channel state information in the first link, wherein the first channel state information is channel state information of a communication link from the network node to the first device.

In an embodiment, the second channel state information is transmitted via a transmission resource for the first channel state information in the first link by the following way: the second channel state information is transmitted via a Physical Uplink Control Channel (PUCCH) resource or Physical Uplink Sharing Channel (PUSCH) resource configured for transmitting the first channel state information; and/or
when the first channel state information needs to be transmitted while the second channel state information is transmitted, the first channel state information and/or the second channel state information are/is transmitted according to a principle of priority, or the first channel state information and the second channel state information are transmitted after being multiplexed, wherein the principle of priority is as follows: dropping all or part of the first channel state information, or dropping all or part of the second channel state information, or dropping both part of the first channel state information and part of the second channel state information.

In an embodiment, the second channel state information is channel state information which is fed back periodically;
the second channel state information is transmitted according to a feedback period configured by a high-layer signaling; or
the second channel state information is transmitted according to configured sending period of a channel measurement reference signal.

In an embodiment, the transmission of the second channel state information is triggered by the transmission of the channel measurement reference signal; or
the transmission of the second channel state information is triggered by a triggering signaling sent by the network node.

In an embodiment, the second channel state information is transmitted in a dedicated resource which refers to a resource dedicated to transmitting the second channel state information;
the dedicated resource is configured by the network node via a high-layer signaling, or the dedicated resource is dynamically granted by the network node via a grant signaling; or the dedicated resource is located in a cellular link traffic channel transmission resource allocated to the first device, moreover, the dedicated resource is determined by a pre-defined way.

In an embodiment, in a case where the dedicated resource is configured by the network node via a high-layer signaling,
the first device sends the second channel state information according to the configuration of the high-layer signaling; or
the transmission of the second channel state information is triggered by the transmission of the channel measurement reference signal, and the first device sends the second channel state information according to the transmission of the channel measurement reference signal; or
the transmission of the second channel state information is triggered by a triggering signaling, and the first device sends the second channel state information according to the triggering signaling.

In an embodiment, in a case where the dedicated resource is dynamically granted by the network node via a grant signaling, the first device receives the grant signaling which is sent by the network node to indicate the transmission of the second channel state information, determines a resource for transmitting the second channel state information based on the grant signaling, and sends the second channel state information via the resource.

In an embodiment, in a case where the dedicated resource is in a traffic channel transmission resource allocated to the first device and is determined by a pre-defined way, the second channel state information is transmitted at a fixed location of the traffic channel transmission resource; and
rate matching is performed on the data of the traffic channel according to a resource occupation condition of the second channel state information, or puncturing is performed on the data of the traffic channel according to the resource occupation condition of the second channel state information.

In an embodiment, the transmission of the second channel state information is triggered by the transmission of the channel measurement reference signal, and the first device sends the second channel state information according to the transmission of the channel measurement reference signal; or the transmission of the second channel state information is triggered by a triggering signaling, and the first device sends the second channel state information according to the triggering signaling.

The method may further include that the network node schedules the data transmission of the second link according to the second channel state information.

A method for processing channel state information includes:
receiving, via a first link, second channel state information of a second link from a first device, wherein the first link is a cellular communication link from the first device to a network node, and the second link is a D2D communication link between a second device capable of communicating with the first device and the first device.

In an embodiment, the resource for receiving the second channel state information is a transmission resource for first channel state information allocated to the first device, wherein the first channel state information is channel state information of a communication link from the network node to the first device.

In an embodiment, the resource is a PUCCH resource or a PUSCH resource configured for transmitting the first channel state information; and/or
when the first channel state information needs to be transmitted while the second channel state information is transmitted, the first device transmits the first channel state information and/or the second channel state information according to a principle of priority, or transmits the first channel state information and the second channel state information after multiplexing the first and the second channel state information; and the network node parses the first channel state information and/or the second channel state information according to the principle of priority or the multiplexing scheme, wherein the principle of priority is as follows: dropping all or part of the first channel state information, or dropping all or part of the second channel state information, or dropping both part of the first channel state information and part of the second channel state information.

In an embodiment, the second channel state information is periodically transmitted channel state information;
and the network node configures the transmission period of the second channel state information via a high-layer signaling; or
the network node configures the transmission of the channel measurement reference signal of the second link, and the second channel state information is transmitted according to the configured sending period of the channel measurement reference signal.

In an embodiment, the network node configures the transmission of the channel measurement reference signal, and the transmission of the channel measurement reference signal triggers the transmission of the second channel state information; or the network node sends a triggering signaling for triggering the transmission of the second channel state information.

In an embodiment, the network node configures a dedicated resource for transmitting the second channel state information; wherein the dedicated resource is configured by the network node via a high-layer signaling, or the dedicated resource is dynamically granted by the network node via a grant signaling, or the dedicated resource is located in a cellular link traffic channel transmission resource allocated to the first device, moreover, the dedicated resource is determined by a pre-defined way.

In an embodiment, in a case where the network node configures a dedicated resource for the transmission of the second channel state information, the network node configures the transmission of the second channel state information via a high-layer signaling, and the network node receives the second channel state information via the dedicated resource according to the configuration; or
the network node configures the transmission of the channel measurement reference signal of the second link, wherein the transmission of the channel measurement reference signal triggers the transmission of the second channel state information, and the network node receives the second channel state information in the dedicated resource according to the configuration of the channel measurement reference signal; or
the network node sends a triggering signaling for triggering the transmission of the second channel state information and receives the second channel state information in the dedicated resource.

In an embodiment, in a case where the dedicated resource is dynamically granted by the network node via a grant signaling, the network node sends a grant signaling for indicating the transmission of the second channel state information and receives the second channel state information according to the grant signaling.

In an embodiment, in a case where the dedicated resource is located in a traffic channel transmission resource allocated to the first device and the specific dedicated resource is determined by a pre-defined way, it is pre-defined that the first device transmits the second channel state information at a fixed location of the traffic channel transmission resource; and it is pre-defined to perform rate matching on the data of the traffic channel according to a resource occupation condition of the second channel state information, or it is pre-defined to perform puncturing on the data of the traffic channel according to the resource occupation condition of the second channel state information;
the network node determines the dedicated resource by the pre-defined way and receives the second channel state information via the dedicated resource.

The method may further include that:
the network node configures the transmission of a channel measurement reference signal, wherein the transmission of the second channel state information is triggered by the channel measurement reference signal; or
   the network node sends a triggering signaling for triggering the first device to transmit the second channel state information.

In an embodiment, the network node also schedules the data transmission of the second link according to the second channel state information.

An apparatus for processing channel state information includes:
a sending module configured to send second channel state information of a second link to a network node via a first link, wherein the first link is a cellular communication link from the apparatus to the network node, and the second link is a D2D communication link between the apparatus and a second device capable of communicating with the apparatus.

In an embodiment, the second channel state information is transmitted via a transmission resource for first channel state information in the first link, wherein the first channel state information is the channel state information of a communication link from the network node to the first device.

The apparatus may further include:
a priority determination module configured to determine the priority of the first channel state information and/or the priority of the second channel state information according to a principle of priority when the first channel state information needs to be transmitted while the second channel state information is transmitted, wherein the principle of priority is as follows: dropping all or part of the first channel state information, or dropping all or part of the second channel state information, or dropping both part of the first channel state information and part of the second channel state information; and/or
a multiplexing module configured to multiplex the first channel state information and the second channel state information when the first channel state information needs to be transmitted while the second channel state information is transmitted;
wherein according to the processing of the priority determination module and/or the processing of the multiplexing module, the sending module transmits the first channel state information and/or the second channel state information via a PUCCH resource or a PUSCH resource configured for transmitting the first channel state information.

In an embodiment, the second channel state information is channel state information which is fed back periodically, and the apparatus may include a receiving module, wherein the receiving module is configured to receive a high-layer signaling for configuring the transmission period of the second channel state information, wherein the second channel state information is transmitted according to the transmission period; or
the receiving module is configured to receive a signaling for configuring a channel measurement reference signal from the second link, and the second channel state information is transmitted according to the configured sending period of the channel measurement reference signal.

The apparatus may further include a receiving module, wherein the receiving module is configured to receive a signaling for configuring a channel measurement reference signal from the second link, and the transmission of the second channel state information is triggered by the transmission of the channel measurement reference signal; or
the receiving module is configured to receive a triggering signaling from the network node, and the transmission of the second channel state information is triggered by the triggering signaling.

In an embodiment, the second channel state information is transmitted via a dedicated resource; the apparatus may include a receiving module configured to receive, from the network node, a high-layer configuration signaling for configuring the dedicated resource; or the receiving module is configured to receive, from the network node, grant information for dynamically granting the dedicated resource; or
the dedicated resource is located in a transmission resource of a cellular link traffic channel allocated to the apparatus and is determined by a pre-defined way;

In an embodiment, in a case where the dedicated resource is configured using the high-layer signaling, the sending module is configured to:
send the second channel state information according to the configuration of the high-layer signaling; or
send the second channel state information according to the transmission of the channel measurement reference signal; or
the receiving module is further configured to receive a triggering signaling, and the sending module is configured to send the second channel state information according to the triggering signaling.

In an embodiment, in a case where the dedicated resource is located in the traffic channel transmission resource allocated to the apparatus and a specific dedicated resource is determined by a pre-defined way, the second channel state information is transmitted at a fixed location of the traffic channel transmission resource; and
the apparatus may further include a traffic channel processing module configured to perform rate matching on the data of the traffic channel according to a resource occupation condition of the second channel state information or perform puncturing on the data of the traffic channel according to the resource occupation condition of the second channel state information.

In a case where the transmission of the second channel state information is triggered by the transmission of a channel measurement reference signal, the apparatus is configured to send the second channel state information according to the transmission of the channel measurement reference signal; or
in a case where the transmission of the second channel state information is triggered by a triggering signaling, the apparatus is configured to send the second channel state information according to the triggering signaling.

The apparatus is a first device (UE) capable of communicating with the second device.

An apparatus for processing channel state information includes:
a receiving module configured to receive, via a first link, second channel state information of a second link from a first device, wherein the first link is a communication link from the first device to the apparatus, and the second link is a D2D communication link between a second device capable of communicating with the first device and the first device.

In an embodiment, the resource for receiving the second channel state information is a transmission resource for first channel state information allocated to the first device, wherein the first channel state information is channel state information of a communication link from the apparatus to the first device.

The resource for receiving the second channel state information is a PUCCH resource or a PUSCH resource configured for transmitting the first channel state information; and/or
when the first channel state information needs to be transmitted while the second channel state information is transmitted, the first device transmits the first channel state information and/or the second channel state information according to a principle of priority, or transmits the first channel state information and the second channel state information after multiplexing the first and the second channel state information; and the apparatus parses the first channel state information and/or the second channel state information according to the principle of priority or the multiplexing scheme, wherein the principle of priority is as follows: dropping all or part of the first channel state information, or dropping all or part of the second channel state information, or dropping part of the first channel state information and part of the second channel state information.

The second channel state information is periodically transmitted channel state information;
the apparatus may further include a sending module configured to send a configuration signaling, wherein the configuration signaling is a high-layer signaling for configuring the transmission period of the second channel state information, and the second channel state information is transmitted according to the transmission period; or
the sending module is configured to send a configuration signaling for configuring transmission of a channel measurement reference signal of the first device on the second link, and the second channel state information is transmitted according to the transmission of the channel measurement reference signal.

The apparatus may include a configuration module configured to configure the transmission of the channel measurement reference signal of the second link, wherein the transmission of the second channel state information is triggered by the transmission of the channel measurement reference signal; or
the apparatus may include a sending module configured to send a triggering signaling for triggering the transmission of the second channel state information.

The resource for receiving the second channel state information is a dedicated resource;
the apparatus may further include a dedicated resource configuration module configured to configure a dedicated resource for transmitting the second channel state information; and a sending module configured to send a resource configuration signaling according to the configuration performed by the dedicated resource configuration module, wherein the resource configuration signaling is a high-layer signaling or a dynamic grant signaling; or
the dedicated resource is located in a traffic channel transmission resource allocated to the first device and is determined by a pre-defined way.

In a case where the resource configuration signaling is a high-layer signaling, the receiving module is configured to receive the second channel state information according to the configuration by the high-layer signaling; or
the apparatus may include a configuration module configured to configure transmission of a channel measurement reference signal, wherein the transmission of the second channel state information is triggered by the transmission of the channel measurement reference signal, and the receiving module is configured to receive the second channel state information according to the configuration of the channel measurement reference signal; or
the apparatus may include a sending module configured to send a triggering signaling for triggering the transmission of the second channel state information, and the receiving module is configured to receive the second channel state information according to the triggering signaling.

In a case where the dedicated resource is located in a traffic channel transmission resource allocated to the first device and a specific dedicated resource is determined by a pre-defined way, it is pre-defined that the first device transmits the second channel state information at a fixed location of the traffic channel transmission resource; and rate matching is performed on the data of the traffic channel according to a resource occupation condition of the second channel state information, or puncturing is performed on the data of the traffic channel according to the resource occupation condition of the second channel state information.

The apparatus may include a traffic channel processing module configured to determine the dedicated resource for the received traffic channel by the pre-defined way and parse the second channel state information in the dedicated resource.

The apparatus may further include:
a configuration module configured to configure the transmission of a channel measurement reference signal, wherein the transmission of the second channel state information is triggered by the transmission of the channel measurement reference signal, and the receiving module receives the second channel state information according to the configuration of the channel measurement reference signal; or
a sending module configured to send a triggering signaling for triggering the first device to transmit the second channel state information, and the receiving module receives the second channel state information according to the triggering signaling.

The apparatus may further include a scheduling module configured to schedule the data transmission of the second link according to the second channel state information.

The apparatus may be a network node.

A system for processing channel state information may include a network node and a first device, wherein the network node is configured to control the first device to send second channel state information of a second link to the network node via a first link, wherein the first link is a cellular communication link from the first device to the network node, and the second link is a D2D communication link between a second device capable of communicating with the first device and the first device.

The embodiments of the disclosure implement the transmission of channel state information during D2D communication in a cellular communication system and consequentially provide a criterion for scheduling during the D2D communication and guarantees the resource utilization rate of the D2D communication.

### BRIEF DESCRIPTION OF THE DRAWINGS

Fig. 1 is a schematic diagram illustrating the cellular communication among pieces of UE in the same cell;
Fig. 2 is a schematic diagram illustrating D2D communication;
Fig. 3 is a schematic diagram illustrating the structure of a radio frame in a Long Term Evolution (LTE)/an LTE-Advanced (LTE-A) system according to an embodiment of the disclosure;
Fig. 4 is a schematic diagram illustrating the structure of an S sub-frame in an LTE/LTE-A system according to an embodiment of the present invention; and
Fig. 5 is a flowchart illustrating a flow of processing channel state information according to an embodiment of the disclosure.

### DETAILED DESCRIPTION

In the actual application, the second channel state information of a second link may be sent to a network node via a first link;
the first link is a cellular communication link from a first device to the network node, and the second link is a D2D communication link between a second device capable and the first device.

The network node may schedule the data transmission of the second link according to the second channel state information.

The second channel state information may be transmitted via a transmission resource for first channel state information in the first link;
the first channel state information is the channel state information of a communication link from the network node to the first device.

The first channel state information may be channel state information which is fed back periodically. In this case, the second channel state information is transmitted via the transmission resource for the first channel state information in the first link by the following way: the second channel state information is transmitted via a Physical Uplink Control Channel (PUCCH) resource or a Physical Uplink Shared Channel (PUSCH) resource configured for transmitting the first channel state information;
if the first channel state information needs to be transmitted while the second channel state information is transmitted, then the first channel state information and/or the second channel state information are/is transmitted according to a principle of priority, or the first channel state information and the second channel state information are transmitted after being multiplexed;
the principle of priority is as follows: dropping all or part of the first channel state information, or dropping all or part of the second channel state information, or dropping both part of the first channel state information and part of the second channel state information.

The second channel state information may be transmitted according to a feedback period configured by a high-layer signaling; or
the second channel state information may be transmitted according to the period of a channel measurement reference signal configured.

Further, the first channel state information may be channel state information which is fed back aperiodically. In this case, the second channel state information is transmitted via the transmission resource for the first channel state information in the first link by the following way: the second channel state information is transmitted via a PUCCH resource or PUSCH resource configured for transmitting the first channel state information;
if the first channel state information needs to be transmitted while the second channel state information is transmitted, then the first channel state information and/or the second channel state information are/is transmitted according to a principle of priority, or the first channel state information and the second channel state information are transmitted after being multiplexed;
the principle of priority is as follows: dropping all or part of the first channel state information, or dropping all or part of the second channel state information, or dropping part of the first channel state information and part of the second channel state information.

In a case where the first channel state information is channel state information which is fed back aperiodically, the transmission of the second channel state information may be triggered by the transmission of a channel measurement reference signal; or the transmission of the second channel state information is triggered by a triggering signaling sent by the network node.

It should be noted that instead of transmitting the second channel state information via the transmission resource for the first channel state information in the first link, a dedicated resource may be configured to transmit the second channel state information in the actual application;
the dedicated resource may be configured by the network node via a high-layer signaling, or the dedicated resource is dynamically granted by the network node via a grant signaling, or the dedicated resource is located in a traffic channel transmission resource allocated to the first device, moreover, the dedicated resource is determined by a pre-defined way.

In a case where the dedicated resource is configured by the network node via a high-layer signaling, the network node may send a Radio Resource Control (RRC) signaling for indicating the transmission of the second channel state information, and the first device determines a resource for transmitting the second channel state information based on the RRC signaling;
the second channel state information may be transmitted periodically;
the transmission of the second channel state information may be configured by the network node via a high-layer signaling, and the first device periodically sends the second channel state information according to the configuration by the high-layer signaling; or
the transmission of the second channel state information may be triggered by the transmission of a channel measurement reference signal, and the first device sends the second channel state information according to the transmission of the channel measurement reference signal; or
the transmission of the second channel state information may be triggered by a triggering signaling (e.g. a triggering signaling in Downlink Control Information (DCI) or a triggering signaling in grant information for scheduling D2D communication), and the first device sends the second channel state information according to the triggering signaling.

In a case where the dedicated resource is dynamically granted by the network node via a grant signaling, the network node may send a grant signaling for indicating the transmission of the second channel state information, and the first device determines a resource for transmitting the second channel state information based on the grant signaling and sends the second channel state information via the resource.

In a case where the dedicated resource is located in a traffic channel transmission resource allocated to the first device and a specific dedicated resource is determined by a pre-defined way, the second channel state information may be transmitted at a fixed location of the traffic channel transmission resource, and rate matching or puncturing is performed on the data of the traffic channel according to the resource occupation condition of the second channel state information. Moreover, in this case, the transmission of the second channel state information may be triggered by the transmission of a channel measurement reference signal, and the first device sends the second channel state information according to the transmission of the channel measurement reference signal; or the transmission of the second channel state information is triggered by a triggering signaling (e.g. a triggering signaling in DCI or triggering signaling in grant information for scheduling D2D communication), and the first device sends the second channel state information according to the triggering signaling.

The disclosure is described below in detail with reference to accompanying drawings when read in conjunction with embodiments. It should be noted that embodiments of the disclosure and the features thereof can be combined with each other if no conflict is caused.

As a wireless channel is characterized in time-varying and unpredictable, the condition of the channel is also time-varying. Thus, the spectral efficiency of a wireless communication system can be obviously improved by adjusting the coding and the modulation scheme of data transmission (also called Modulation and Coding Scheme (MCS) in some systems) through Adaptive Modulation and Coding (AMC) in real time.

In the application of AMC to a system, if CSI can be used as a criterion for MCS adjustment, then a more accurate scheduling can be achieved to better exploit the performance advantages of AMC. Channel state information is generally obtained by a data receiving terminal based on the measurement on a reference signal and reported to a network node which schedules transmission. When D2D communication is introduced in a cellular communication system, a similar problem also appears, that is, it is needed to report channel state information to a network node which schedules transmission.

The following related exemplary embodiments are described in the context of a 3rd Generation Partnership Project (3GPP) LTE/LTE-A cellular communication system which is based on an Orthogonal Frequency Division Multiplexing (OFDM) technology in downlink and Single carrier-Frequency Division Multiplexing Access (SC-FDMA) in uplink. In an OFDM/SC-FDMA system, communication resources are in a time-frequency two-dimensional form. For example, in an LTE/LTE-A system, communication resources of uplink and downlink are divided into frames in the time direction, the length of each radio frame is 10ms, including 10 sub-frames the length of which is 1 ms, wherein each sub-frame may include two slots, the length of which is 0.5ms, as shown in Fig. 3.

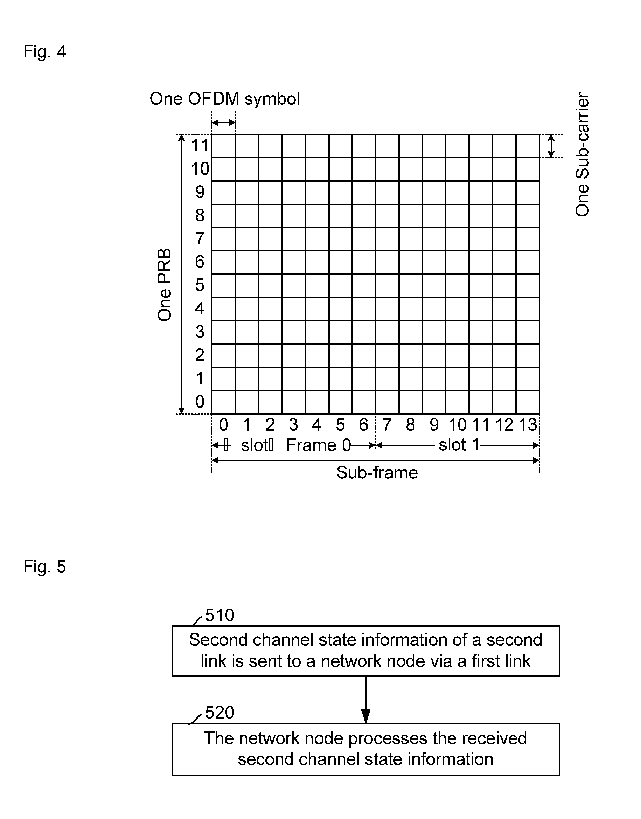

In the frequency direction, resources are divided into sub-carriers, the minimal unit of frequency-domain resource allocation is resource block (RB), each RB corresponding to a Physical RB (PRB) of a physical resource. One PRB may include 12 sub-carriers in the frequency domain, corresponding to one slot in the time domain. The resource on each OFDM symbol corresponding to one sub-carrier is referred to as a Resource Element (RE), as shown in Fig. 4.

In an LTE/LTE-A cellular communication system, the measurement of downlink is mainly performed based on a cell-specific Reference signal (CRS, or called a common reference signal) and a Channel State Information-Reference Signal (CSI-RS), the data transmission of downlink is scheduled based on a CRS or CSI-RS measurement result fed back by UE; the measurement of uplink is generally performed based on a Sounding Reference Signal (SRS), and the data transmission of uplink is scheduled based on the result of an SRS measurement performed by a network node. In a TDD system, since the same frequency band is used for the uplink and downlink, downlink transmission may also be scheduled based on the result of an SRS measurement, that is, by using the channel reciprocity.

The network node described in embodiments of the disclosure refers to a node at a network in an LTE/LTE-A system, for example, an evolved Node B (eNB) or other network units at a network side, and the apparatus described in embodiments of the disclosure refers to UE in an LTE/LTE-A system.

### Embodiment 1

In the embodiment, a first device sends second channel state information of a second link to a network node via a first link, wherein the first link is a cellular communication link from the first device to the network node, and the second link is a D2D communication link between a second device and the first device.

The second channel state information may be transmitted via a transmission resource for first channel state information, wherein the first channel state information is the channel state information of a link from the network node to the first device. Generally, the network node configures a dedicated resource for transmitting the first channel state information. For example, in an LTE/LTE-A system, an eNB configures a PUCCH resource for UE to feed back CSI periodically. When desiring to feed back second channel state information (e.g. the channel state information of a D2D link), the UE transmits the channel state information of the D2D link using the PUCCH resource.

Specifically, when the UE needs to feed back the channel state information of the D2D link, if there is only the channel state information of the D2D link in a sub-frame for transmitting the channel state information, then the UE may transmit the channel state information of the D2D link in the sub-frame by using a PUCCH format for an LTE/LTE-A cellular communication system, for example, by using the Uplink Control Information (UCI) format 2, or the UCI format 2a, or the UCI format 2b or the UCI format 3 of PUCCH. The multiplexing, the coding, the resource mapping of channel state information may all use that of the foregoing PUCCH formats for cellular communication.

When the UE needs to feed back the channel state information of a D2D link, if the sub-frame for transmitting the channel state information also contains first channel state information (e.g. channel state information of a cellular link) to be transmitted, then the UE determines a channel state information transmission scheme according to a preset priority principle.

The preset priority principle may be that the priority of the channel state information of a cellular link (that is, the first channel state information) is not higher than that of the channel state information of a D2D link (that is, the second channel state information). In this case, the first channel state information is all or partially dropped when the two kinds of channel state information are contained in the same sub-frame. Dropping all the first channel state information refers to transmitting the second channel state information in a corresponding resource without transmitting the first channel state information in the sub-frame any more, for example, giving up the transmission of a Rank Indicator (RI), or giving up the transmission of an RI and a Pre-coding Type Indicator (PTI), or giving up the transmission of a Pre-coding Matrix Indicator (PMI) and Channel Quality Information (CQI). Dropping part of the first channel state information refers to dropping part of the first channel state information, for example, a PMI and CQI may be included in the first channel state information for simultaneous transmission, either of the PMI or the CQI may be dropped while the rest first channel state information is transmitted in a first channel state information transmission resource after being multiplexed with the second channel state information; or the first channel state information includes the channel state information of a plurality of cells, and the channel state information of one of the cells may be replaced by the second channel state information and then transmitted.

The preset priority principle may also be that the priority of wideband feedback information is higher than priority of sub-band feedback information, and/or that the priority of the second channel state information is higher than priority of the first channel state information. For example, the first channel state information and second channel state information fed back may be in the same sub-frame, if one of the first and second channel state information fed back is wideband feedback information, then the wideband feedback information is dropped; and if the first and second channel state information fed back are both wideband feedback information or sub-band feedback information, then the first channel state information is partially or totally dropped.

Feedback overhead may also be taken into consideration when presetting priority. For example, if the sum of the loads of the fed back first channel state information and second channel state information is not greater than the bearable load of a resource allocated for transmitting the first channel state information, then the first channel state information and the second channel state information are transmitted after being multiplexed, otherwise, the channel state information to be transmitted is determined using the foregoing priority principle.

Alternatively, when the UE needs to feed back the channel state information of a D2D link, if the channel state information of a cellular link (e.g. first channel state information) to be transmitted is also contained in a sub-frame for transmitting the channel state information, the UE multiplexes the first channel state information and the second channel state information and then transmits the first channel state information and the second channel state information. The multiplexing scheme may be understood with reference to a multi-cell channel state information feedback scheme for an LTE/LTE-A system. In other words, the second channel state information is transmitted as the channel state information of a cell in a cellular communication system.

The second channel state information may be feedback information transmitted periodically or aperiodically.

The network node receives the second channel state information according to the preset priority.

### Embodiment 2

In the embodiment, a first device sends the second channel state information of a second link to a network node via a first link, wherein the first link is a cellular communication link from the first device to the network node, and the second link is a D2D communication link between a second device and the first device.

The second channel state information may be transmitted via a dedicated resource which may be a resource configured by the network node via a high-layer signaling. For example, in an LTE/LTE-A system, an eNB configures a second channel state information transmission resource for a D2D UE via an RRC signaling. The configured resource may be a dedicated resource in a PUCCH format, and the coding and bearing of the second channel state information may be understood with reference to a related channel state information processing scheme for an LTE/LTE-A cellular communication system; the configured resource may also be a dedicated resource block, and the coding and bearing of the second channel state information may be understood with reference to a PUSCH processing scheme for an LTE/LTE-A cellular communication system.

Alternatively, the dedicated resource may be a resource dynamically granted by the network node via a grant signaling. For example, in an LTE/LTE-A system, an eNB grants the D2D UE a resource for transmitting the second channel state information via uplink grant information. The coding and bearing scheme of the second channel state information may refer to a PUSCH processing scheme in an LTE/LTE-A cellular communication system.

Alternatively, the dedicated resource is a pre-defined channel state information transmission resource. The pre-defined scheme may be that specific resource block(s) (e.g. the resource block having the smallest or greatest resource index number) in a traffic channel can be used for channel state information transmission, or that the channel state information is transmitted by a fixed resource in a traffic channel, for example, the second channel state information is transmitted in the symbols at two sides of a reference signal symbol, or that the second channel state information is transmitted through the beginning or ending of traffic channel resource mapping; the specific amount of the resource used is determined according to the load of the second channel state information. Further, rate matching or puncturing is performed on the data of the traffic channel according to a resource utilization condition of the second channel state information.

The second channel state information may be feedback information transmitted periodically or aperiodically.

The network node receives the second channel state information according to the configuration.

### Embodiment 3

D2D channel state information may be transmitted according to a high-layer configuration. For example, in an LTE/LTE-A system, an eNB configures, via an RRC signaling, the transmission period of D2D channel state information and the location of a sub-frame for transmitting the D2D channel state information for UE, and the UE transmits the D2D channel state information in the configured sub-frame according to the configured period.

The transmission of the D2D channel state information may be triggered by a reference signal. For example, in an LTE/LTE-A system, UE, after detecting a measurement reference signal sent by another UE in a sub-frame #n, sends D2D channel state information in a sub-frame #n+k based on the measurement on the measurement reference signal. The sub-frame #n+k here may be the first feedback sub-frame of the UE, meeting a condition that k is greater than a fixed sub-frame interval, for example, k>3, the feedback sub-frame may be a transmission sub-frame for first channel state information (e.g. the channel state information of a cellular link) or a transmission sub-frame for second channel state information (e.g. the channel state information of a D2D link). The sub-frame #n+k may also be the first traffic channel transmission sub-frame of the UE meeting a condition that k is greater than a fixed sub-frame interval, wherein the traffic channel may be a D2D link traffic channel or a cellular link uplink traffic channel.

The transmission of the D2D channel state information may be triggered by a triggering signaling. For example, in an LTE/LTE-A system, UE is dynamically triggered by a triggering signaling in grant information to transmit D2D channel state information. The grant information may be uplink grant for scheduling the transmission of cellular uplink data or grant information for scheduling the data transmission of a D2D link. After detecting the grant information, the UE sends the D2D channel state information if the state of the triggering signaling in the grant information represents that the transmission of D2D channel state information is activated.

The transmission of the D2D channel state information may be triggered or scheduled by grant information. The grant information may be dedicated grant information dedicated to trigger the UE to transmit the D2D channel state information; or the grant information has a specific identifier which represents that the grant information is used to trigger the UE to transmit the D2D channel state information. For example, in an LTE/LTE-A system, dedicated grant information is set to trigger UE to transmit D2D channel state information; the 'dedicated' means that the grant information is different in format from grant information for scheduling UE to receive/send data. Or the grant information for scheduling UE to feed back D2D channel state information may have the same format (for example, DCI format 0/4 or control information format for scheduling D2D communication) with the grant information for scheduling the UE to receive/send data, but is different in having a specific identifier for representing the use of the grant information for scheduling the UE to transmit D2D channel state information. For example, the grant information may scramble Cyclic Redundancy Check (CRC) using a dedicated Radio Network Temporary identifier (RNTI) or a dedicated identifier, or a specific parameter in the grant information has a specific value, for example, a Modulation and Coding Scheme (MCS) and redundancy version parameter in the grant information has a specific value, for example, 11111 or 00000.

The transmission of the D2D channel state information may be triggered by a combination of the foregoing approaches. For example, the transmission period of the D2D channel state information and/or the location of a sub-frame for transmitting the D2D channel state information are/is configured via a high-layer signaling, however, the UE only sends channel state information after receiving a triggering signaling.

For another example, the transmission period of the D2D channel state information and/or the location of a sub-frame for transmitting the D2D channel state information are/is configured via a high-layer signaling, however, the UE only sends channel state information after detecting a measurement reference signal.

For still another example, the transmission period of the D2D channel state information and/or the location of a sub-frame for transmitting the D2D channel state information are/is configured via a high-layer signaling, however, the UE only sends channel state information after detecting grant information for scheduling the transmission of the D2D channel state information.

It should be noted that the second channel state information may be measured by the first device according to a reference signal sent by the second device. For example, the reference signal sent by the second device may be a measurement reference signal for channel state measurement, for example, a CSI-RS, or an SRS or other dedicated measurement reference signals designed for D2D communication, or the reference signal sent by the second device may be a Demodulation Reference Signal (DMRS) which may be simultaneously sent with a D2D traffic channel sent by the second device.

It can be known from the description above that the channel state information processing operation described herein may be the flow as shown in Fig. 5, the flow including the following steps:
step 510: the second channel state information of a second link is sent to a network node via a first link; and
step 520: the network node processes the second channel state information received.

It should be noted that according to an embodiment of the disclosure, an apparatus for processing channel state information includes:
a sending module configured to send second channel state information of a second link to a network node via a first link, wherein the first link is a cellular communication link from the apparatus to the network node, and the second link is a D2D communication link between the apparatus and a second device capable of communicating with the apparatus.

The second channel state information is transmitted via a transmission resource for first channel state information in the first link, wherein the first channel state information is the channel state information of a communication link from the network node to the first device.

The apparatus may further include:
a priority determination module configured to determine the priority of the first channel state information and/or the priority of the second channel state information according to a priority principle if the first channel state information needs to be transmitted while the second channel state information is transmitted, wherein the priority principle is as follows: dropping all or part of the first channel state information, or dropping all or part of the second channel state information, or dropping part of the first channel state information and part of the second channel state information; and/or
a multiplexing module configured to multiplex the first channel state information and the second channel state information if the first channel state information needs to be transmitted while the second channel state information is transmitted;
the sending module transmits, according to the processing of the priority determination module and/or the processing of the multiplexing module, the first channel state information and/or the second channel state information via a PUCCH resource or a PUSCH resource configured for transmitting the first channel state information.

The second channel state information is channel state information fed back periodically; and the apparatus may include a receiving module;
the receiving module is configured to receive a high-layer signaling for configuring the transmission period of the second channel state information, wherein the second channel state information is transmitted according to the transmission period, or
the receiving module is configured to receive a signaling of configuring a channel measurement reference signal from the second link, and the second channel state information is transmitted according to a configured sending period of the channel measurement reference signal; and
the apparatus may further include a receiving module, wherein the receiving module is configured to receive a signaling of configuring a channel measurement reference signal from the second link, and the transmission of the second channel state information is triggered by the transmission of the channel measurement reference signal; or
the receiving module is configured to receive a triggering signaling from the network node, and the transmission of the second channel state information is triggered by the triggering signaling.

The second channel state information is transmitted via a dedicated resource;
the apparatus may include a receiving module configured to receive, from the network node, a high-layer configuration signaling for configuring the dedicated resource or grant information for dynamically granting the dedicated resource; or
the dedicated resource is located in a cellular link traffic channel transmission resource allocated to the apparatus and is determined by a pre-defined way.

In a case where the dedicated resource is configured by using the high-layer signaling, the sending module is configured to:
send the second channel state information according to the configuration of the high-layer signaling, or
send the second channel state information according to the transmission of the channel measurement reference signal; or,
the receiving module is further configured to receive a triggering signaling, and the sending module is configured to send the second channel state information according to the triggering signaling.

In a case where the dedicated resource is in a traffic channel transmission resource allocated to the apparatus and a specific dedicated resource is determined in a pre-defined way, the second channel state information is transmitted at a fixed location of the traffic channel transmission resource; and
the apparatus may further include a traffic channel processing module configured to perform rate matching on the data of the traffic channel according to a resource occupation condition of the second channel state information or perform puncturing on the data of the traffic channel according to the resource occupation condition of the second channel state information.

In a case where the transmission of the second channel state information is triggered by the transmission of a channel measurement reference signal, the apparatus is configured to send the second channel state information according to the transmission of the channel measurement reference signal; or
in a case where the transmission of the second channel state information is triggered by a triggering signaling, the apparatus is configured to send the second channel state information according to the triggering signaling.

The apparatus is a first device (UE) capable of communicating with the second device.

According to an embodiment of the disclosure, an apparatus for processing channel state information may further include:
a receiving module configured to receive, via a first link, second channel state information of a second link from a first device, wherein the first link is a communication link from the first device to the apparatus, and the second link is a D2D communication link between a second device capable of communicating with the first device and the first device.

The resource for receiving the second channel state information is a transmission resource for first channel state information allocated to the first device, wherein the first channel state information is the channel state information of a communication link from the apparatus to the first device.

The resource for receiving the second channel state information is a PUCCH resource or a PUSCH resource configured for transmitting the first channel state information; and/or
if the first channel state information needs to be transmitted while the second channel state information is transmitted, then the first device transmits the first channel state information and/or the second channel state information according to a priority principle or transmits the first channel state information and the second channel state information after multiplexing the first and the second channel state information; and the apparatus parses the first channel state information and/or the second channel state information according to the priority principle or the multiplexing scheme, wherein
the priority principle is as follows: dropping all or part of the first channel state information, or dropping all or part of the second channel state information, or dropping both part of the first channel state information and part of the second channel state information.

The second channel state information is periodically transmitted channel state information; and
the apparatus may include a sending module configured to send a configuration signaling, wherein the configuration signaling is a high-layer signaling for configuring the transmission period of the second channel state information, and the second channel state information is transmitted according to the transmission period; or
the sending module is configured to send a configuration signaling for configuring the transmission of the channel measurement reference signal of the first device on the second link, and the second channel state information is transmitted according to the transmission of the channel measurement reference signal.

The apparatus may include a configuration module configured to configure the transmission of the channel measurement reference signal of the second link, wherein the transmission of the second channel state information is triggered by the transmission of the channel measurement reference signal; or
the apparatus may include a sending module configured to send a triggering signaling for triggering the transmission of the second channel state information.

The resource for receiving the second channel state information is a dedicated resource;
the apparatus may include a dedicated resource configuration module configured to configure a dedicated resource for transmitting the second channel state information; and a sending module configured to send a resource configuration signaling according to the configuration of the dedicated resource configuration module, wherein the resource configuration signaling is a high-layer signaling or a dynamic grant signaling; or
the dedicated resource is located in a traffic channel transmission resource allocated to the first device and is determined by a pre-defined way.

In a case where the resource configuration signaling is a high-layer signaling, the receiving module is configured to receive the second channel state information according to the configuration of the high-layer signaling; or
the apparatus may include a configuration module configured to configure the transmission of a channel measurement reference signal; the transmission of the second channel state information is triggered by the transmission of the channel measurement reference signal; and the receiving module is configured to receive the second channel state information according to the configuration of the channel measurement reference signal; or
the apparatus may include a sending module configured to send a triggering signaling for triggering the transmission of the second channel state information, and the receiving module is further configured to receive the second channel state information according to the triggering signaling.

In a case where the dedicated resource is located in a traffic channel transmission resource allocated to the first device and a specific dedicated resource is determined by a pre-defined way, it is pre-defined that the first device transmits the second channel state information at a fixed location of the traffic channel transmission resource; and rate matching is performed on the data of the traffic channel according to the resource occupation condition of the second channel state information, or puncturing is performed on the data of the traffic channel according to the resource occupation condition of the second channel state information; and
the apparatus may include a traffic channel processing module configured to determine the dedicated resource for the received traffic channel by the pre-defined way and parse the second channel state information in the dedicated resource.

The apparatus may include:
a configuration module configured to configure the transmission of a channel measurement reference signal, in this case, the transmission of the second channel state information is triggered by the transmission of the channel measurement reference signal; and the receiving module receives the second channel state information according to the configuration of the channel measurement reference signal; or
a sending module configured to send a triggering signaling for triggering the first device to transmit the second channel state information, in this case, the receiving module receives the second channel state information according to the triggering signaling.

The apparatus may further include a scheduling module configured to schedule the data transmission of the second link according to the second channel state information.

The apparatus is a network node.

According to an embodiment of the disclosure, a system for processing channel state information may include a network node and a first device, wherein the network node is configured to control the first device to send second channel state information of a second link to the network node via a first link;
the first link is a cellular communication link from the first device to the network node, and the second link is a D2D communication link between a second device capable of communicating with the first device and the first device.

Apparently, it should be appreciated by those skilled in the art that each module or step described in the disclosure may be implemented by a universal computer and that the modules or steps may be integrated on a single computer or distributed on a network consisting of a plurality of computers; optionally, the modules or steps may be implemented by executable program codes so that the modules or steps may be stored in a memory to be executed by a computer, and in some cases, the steps shown or described herein may be executed in a sequence different from this presented herein, or the modules or steps are formed into integrated circuit modules, or several of the modules or steps are formed into integrated circuit modules. Therefore, the disclosure is not limited to the combination of specific hardware and software.

It should be noted that the foregoing sending module may be a transmitter, the foregoing multiplexing module may be a multiplexer, the foregoing receiving module may be a receiver, the foregoing priority determination module, traffic channel processing module, configuration module, dedicated resource configuration module and scheduling module may be chips or single-chips.

In conclusion, all the method and the apparatus and the system capable of implementing the method disclosed herein implement the transmission of channel state information during D2D communication in a cellular communication system and consequentially provide a criterion for scheduling during D2D communication and guarantee the resource utilization rate of D2D communication; moreover, the disclosure realizes the compatibility of D2D communication with cellular communication without obviously increasing the complexity of the design or realization of a UE.

The mentioned above are only embodiments of the disclosure but not the limitation to the disclosure.

## Claims

1. A method for processing channel state information, comprising:
sending second channel state information of a second link to a network node via a first link, wherein the first link is a cellular communication link from a first device to the network node, and the second link is a Device-to-Device (D2D) communication link between the first device and a second device capable of communicating with the first device.

2. The method according to claim 1, wherein the second channel state information is transmitted via a transmission resource for first channel state information in the first link, wherein the first channel state information is channel state information of a communication link from the network node to the first device.

3. The method according to claim 2, wherein the second channel state information is transmitted via the transmission resource for the first channel state information in the first link in a following way: the second channel state information is transmitted via a Physical Uplink Control Channel (PUCCH) resource or a Physical Uplink Sharing Channel (PUSCH) resource configured for transmitting the first channel state information; and/or
when the first channel state information needs to be transmitted while the second channel state information is transmitted, the first channel state information and/or the second channel state information are/is transmitted according to a priority principle, or the first channel state information and the second channel state information are transmitted after being multiplexed, wherein the priority principle is as follows: dropping all or part of the first channel state information, or dropping all or part of the second channel state information, or dropping both part of the first channel state information and part of the second channel state information.

4. The method according to any one of claims 1 to 3, wherein
the second channel state information is channel state information which is fed back periodically;
the second channel state information is transmitted according to a feedback period configured by a high-layer signaling; or
the second channel state information is transmitted according to a configured sending period of a channel measurement reference signal.

5. The method according to any one of claims 1 to 3, wherein
transmission of the second channel state information is triggered by transmission of a channel measurement reference signal; or
transmission of the second channel state information is triggered by a triggering signaling sent by the network node.

6. The method according to claim 1, wherein the second channel state information is transmitted via a dedicated resource which refers to a resource dedicated to transmit the second channel state information, wherein the dedicated resource is configured by the network node via a high-layer signaling, or the dedicated resource is dynamically granted by the network node via a grant signaling; or the dedicated resource is located in a cellular link traffic channel transmission resource allocated to the first device, moreover, the dedicated resource is determined by a pre-defined way.

7. The method according to claim 6, wherein when where the dedicated resource is configured by the network node via the high-layer signaling,
the first device sends the second channel state information according to the configuration by the high-layer signaling; or
the transmission of the second channel state information is triggered by transmission of a channel measurement reference signal, and the first device sends the second channel state information according to the transmission of the channel measurement reference signal; or
the transmission of the second channel state information is triggered by a triggering signal, and the first device sends the second channel state information according to the triggering signaling.

8. The method according to claim 6, wherein when the dedicated resource is dynamically granted by the network node via the grant signaling, the first device receives the grant signaling which is sent by the network node to indicate the transmission of the second channel state information, determines a resource for transmitting the second channel state information based on the grant signaling, and sends the second channel state information via the resource.

9. The method according to claim 6, wherein when the dedicated resource is located in the cellular link traffic channel transmission resource allocated to the first device and is determined by the pre-defined way, the second channel state information is transmitted at a fixed location of the cellular link traffic channel transmission resource; and rate matching is performed on data of the traffic channel according to a resource occupation condition of the second channel state information, or puncturing is performed on the data of the traffic channel according to the resource occupation condition of the second channel state information.

10. The method according to claim 9, wherein the transmission of the second channel state information is triggered by transmission of a channel measurement reference signal, and the first device sends the second channel state information according to the transmission of the channel measurement reference signal; or
the transmission of the second channel state information is triggered by a triggering signaling, and the first device sends the second channel state information according to the triggering signaling.

11. The method according to claim 1, further comprising:
scheduling, by the network node, data transmission of the second link according to the second channel state information.

12. A method for processing channel state information, comprising:
receiving, via a first link, second channel state information of a second link from a first device, wherein the first link is a cellular communication link from the first device to a network node, and the second link is a Device-to-Device (D2D) communication link between the first device and a second device capable of communicating with the first device.

13. The method according to claim 12, wherein a resource for receiving the second channel state information is a transmission resource for first channel state information allocated to the first device, wherein the first channel state information is channel state information of a communication link from the network node to the first device.

14. The method according to claim 13, wherein the resource is a Physical Uplink Control Channel (PUCCH) resource or a Physical Uplink Sharing Channel (PUSCH) resource configured for transmitting the first channel state information; and/or
when the first channel state information needs to be transmitted while the second channel state information is transmitted, the first device transmits the first channel state information and/or the second channel state information according to a priority principle; or the first device transmits the first channel state information and the second channel state information after multiplexing the first and the second channel state information; the network node parses the first channel state information and/or the second channel state information according to the priority principle or the multiplexing scheme, wherein the priority principle is as follows: dropping all or part of the first channel state information, or dropping all or part of the second channel state information, or dropping both part of the first channel state information and part of the second channel state information.

15. The method according to any one of claims 12 to 14, wherein the second channel state information is periodically transmitted channel state information;
the network node configures a transmission period of the second channel state information via a high-layer signaling; or
the network node configures transmission of a channel measurement reference signal of the second link, and the second channel state information is transmitted according to a configured sending period of the channel measurement reference signal.

16. The method according to any one of claims 12 to 14, wherein the network node configures transmission of a channel measurement reference signal, and the transmission of the channel measurement reference signal triggers transmission of the second channel state information; or
the network node sends a triggering signaling for triggering transmission of the second channel state information.

17. The method according to claim 12, wherein the network node configures a dedicated resource for transmitting the second channel state information;
the dedicated resource is configured by the network node via a high-layer signaling, or the dedicated resource is dynamically granted by the network node via a grant signaling, or the dedicated resource is located in a cellular link traffic channel transmission resource allocated to the first device, moreover, the dedicated resource is determined by a pre-defined way.

18. The method according to claim 17, wherein when the network node configures the dedicated resource for transmitting the second channel state information,
the network node configures the transmission of the second channel state information via a high-layer signaling, and the network node receives the second channel state information from the dedicated resource according to the configuration; or
the network node configures transmission of a channel measurement reference signal of the second link, wherein the transmission of the channel measurement reference signal triggers the transmission of the second channel state information, and the network node receives the second channel state information from the dedicated resource according to the configuration of the channel measurement reference signal; or
the network node sends a triggering signaling for triggering the transmission of the second channel state information and receives the second channel state information from the dedicated resource.

19. The method according to claim 17, wherein when the dedicated resource is dynamically granted by the network node via the grant signaling, the network node sends the grant signaling for indicating the transmission of the second channel state information and receives the second channel state information according to the grant signaling.

20. The method according to claim 17, wherein when the dedicated resource is located in the cellular link traffic channel transmission resource allocated to the first device and the dedicated resource is determined by the pre-defined way, it is pre-defined that the first device transmits the second channel state information at a fixed location of the cellular link traffic channel transmission resource; and it is pre-defined to perform rate matching on data of the traffic channel according to a resource occupation condition of the second channel state information, or it is pre-defined to perform puncturing on the data of the traffic channel according to the resource occupation condition of the second channel state information; and
the network node determines the dedicated resource by the pre-defined way and receives the second channel state information from the dedicated resource.

21. The method according to claim 20, further comprising:
configuring, by the network node, transmission of a channel measurement reference signal, wherein the transmission of the second channel state information is triggered by the channel measurement reference signal; or
the network node sends a triggering signaling for triggering the first device to transmit the second channel state information.

22. The method according to claim 12, wherein the network node also schedules data transmission of the second link according to the second channel state information.

23. An apparatus for processing channel state information, comprising a sending module configured to send second channel state information of a second link to a network node via a first link, wherein the first link is a cellular communication link from the apparatus to the network node, and the second link is a Device-to-Device (D2D) communication link between the apparatus and a second device capable of communicating with the apparatus.

24. The apparatus according to claim 23, wherein the second channel state information is transmitted via a transmission resource for first channel state information in the first link, wherein the first channel state information is channel state information of a communication link from the network node to the first device.

25. The apparatus according to claim 24, further comprising:
a priority determination module configured to determine priority of the first channel state information and/or priority of the second channel state information according to a priority principle when the first channel state information needs to be transmitted while the second channel state information is transmitted, wherein the priority principle is as follows: dropping all or part of the first channel state information, or dropping all or part of the second channel state information, or dropping both part of the first channel state information and part of the second channel state information; and/or
a multiplexing module configured to multiplex the first channel state information and the second channel state information when the first channel state information needs to be transmitted while the second channel state information is transmitted;
wherein the sending module transmits the first channel state information and/or the second channel state information via a Physical Uplink Control Channel (PUCCH) resource or a Physical Uplink Sharing Channel (PUSCH) resource configured for transmitting the first channel state information, according to processing performed by the priority determination module and/or processing performed by the multiplexing module.

26. The apparatus according to any one of claims 23 to 25, wherein second channel state information is channel state information which is fed back periodically;
the apparatus further comprises a receiving module configured to receive a high-layer signaling, wherein the high-layer signaling is for configuring a transmission period of the second channel state information, and the second channel state information is transmitted according to the transmission period; or
the receiving module is configured to receive a signaling for configuring a channel measurement reference signal from the second link, and the second channel state information is transmitted according to a configured sending period of the channel measurement reference signal.

27. The apparatus according to any one of claims 23 to 25, further comprising a receiving module, wherein the receiving module is configured to receive a signaling for configuring a channel measurement reference signal from the second link, and the transmission of the second channel state information is triggered by transmission of the channel measurement reference signal; or the receiving module is configured to receive a triggering signaling from the network node, and the transmission of the second channel state information is triggered by the triggering signaling.

28. The apparatus according to claim 23, wherein the second channel state information is transmitted via a dedicated resource;
the apparatus further comprises a receiving module which is configured to receive, from the network node, a high-layer configuration signaling for configuring the dedicated resource, or configured to receive, from the network node, grant information for dynamically granting the dedicated resource; or
the dedicated resource is located in a cellular link traffic channel transmission resource allocated to the apparatus and is determined by a pre-defined way.

29. The apparatus according to claim 28, wherein when the dedicated resource is configured using the high-layer configuration signaling, the sending module is configured to:
send the second channel state information according to configuration by the high-layer configuration signaling; or
send the second channel state information according to transmission of a channel measurement reference signal; or
the receiving module is further configured to receive a triggering signaling, and the sending module is configured to send the second channel state information according to the triggering signaling.

30. The apparatus according to claim 28, wherein when the dedicated resource is located in the cellular link traffic channel transmission resource allocated to the apparatus and the dedicated resource is determined by pre-defined way, the second channel state information is transmitted at a fixed location of the cellular link traffic channel transmission resource; and
the apparatus may further include a traffic channel processing module configured to perform rate matching on data of the traffic channel according to a resource occupation condition of the second channel state information or perform puncturing on the data of the traffic channel according to the resource occupation condition of the second channel state information.

31. The apparatus according to claim 30, wherein when the transmission of the second channel state information is triggered by transmission of a channel measurement reference signal, the apparatus is configured to send the second channel state information according to the transmission of the channel measurement reference signal; or
when the transmission of the second channel state information is triggered by a triggering signaling, the apparatus is configured to send the second channel state information according to the triggering signaling.

32. The apparatus according to claim 23, wherein the apparatus is User Equipment (UE) which is a first device capable of communicating with the second device.

33. An apparatus for processing channel state information, comprising a receiving module configured to receive, via a first link, second channel state information of a second link from a first device, wherein the first link is a communication link from the first device to the apparatus, and the second link is a Device-to-Device (D2D) communication link between the first device and a second device capable of communicating with the first device.

34. The apparatus according to claim 33, wherein a resource for receiving the second channel state information is a transmission resource for first channel state information allocated to the first device, wherein the first channel state information is channel state information of a communication link from the apparatus to the first device.

35. The apparatus according to claim 34, wherein the resource for receiving the second channel state information is a Physical Uplink Control Channel (PUCCH) resource or a Physical Uplink Sharing Channel (PUSCH) resource configured for transmitting the first channel state information; and/or
when the first channel state information needs to be transmitted while the second channel state information is transmitted, the first device transmits the first channel state information and/or the second channel state information according to a priority principle; or the first device transmits the first channel state information and the second channel state information after multiplexing the first and the second channel state information; and the apparatus parses the first channel state information and/or the second channel state information according to the priority principle or the multiplexing scheme, wherein the priority principle is as follows: dropping all or part of the first channel state information, or dropping all or part of the second channel state information, or dropping both part of the first channel state information and part of the second channel state information.

36. The apparatus according to any one of claims 33 to 35, wherein the second channel state information is periodically transmitted channel state information;
the apparatus further comprises a sending module configured to send a configuration signaling, wherein the configuration signaling is a high-layer signaling for configuring a transmission period of the second channel state information, and the second channel state information is transmitted according to the transmission period; or
the sending module is configured to send a configuration signaling, wherein the configuration signaling is for configuring transmission of a channel measurement reference signal of the first device on the second link, and the second channel state information is transmitted according to the transmission of the channel measurement reference signal.

37. The apparatus according to any one of claims 33 to 35, further comprising a configuration module configured to configure transmission of a channel measurement reference signal of the second link, wherein the transmission of the second channel state information is triggered by the transmission of the channel measurement reference signal; or
the apparatus comprising a sending module configured to send a triggering signaling for triggering the transmission of the second channel state information.

38. The apparatus according to claim 33, wherein a resource for receiving the second channel state information is a dedicated resource;
the apparatus further comprises a dedicated resource configuration module configured to configure a dedicated resource for transmitting the second channel state information, and comprises a sending module configured to send a resource configuration signaling according to the configuration by the dedicated resource configuration module, wherein the resource configuration signaling is a high-layer signaling or a dynamic grant signaling; or
the dedicated resource is located in a traffic channel transmission resource allocated to the first device and is determined by a pre-defined way.

39. The apparatus according to claim 38, wherein when the resource configuration signaling is a high-layer signaling,
the receiving module is configured to receive the second channel state information according to the configuration by the high-layer signaling; or
the apparatus comprises a configuration module configured to configure transmission of a channel measurement reference signal, wherein the transmission of the second channel state information is triggered by the transmission of the channel measurement reference signal, and the receiving module is configured to receive the second channel state information according to configuration of the channel measurement reference signal; or
the apparatus comprises a sending module configured to send a triggering signaling for triggering the transmission of the second channel state information, and the receiving module is configured to receive the second channel state information according to the triggering signaling.

40. The apparatus according to claim 38, wherein when the dedicated resource is located in a traffic channel transmission resource allocated to the first device and the dedicated resource is determined by a pre-defined way, it is pre-defined that the first device transmits the second channel state information at a fixed location of the traffic channel transmission resource and it is pre-defined that rate matching is performed on data of the traffic channel according to a resource occupation condition of the second channel state information, and puncturing is performed on the data of the traffic channel according to the resource occupation condition of the second channel state information; and
the apparatus comprises a traffic channel processing module configured to determine the dedicated resource for a received traffic channel by the pre-defined way and to parse the second channel state information in the dedicated resource.

41. The apparatus according to claim 40, comprising:
a configuration module configured to configure transmission of a channel measurement reference signal, wherein the transmission of the second channel state information is triggered by the transmission of the channel measurement reference signal, and the receiving module receives the second channel state information according to configuration of the channel measurement reference signal; or
a sending module configured to send a triggering signaling for triggering the first device to transmit the second channel state information, and the receiving module receives the second channel state information according to the triggering signaling.

42. The apparatus according to claim 33, further comprising a scheduling module configured to schedule data transmission of the second link according to the second channel state information.

43. The apparatus according to claim 33, wherein the apparatus is a network node.

44. A system for processing channel state information, comprising a network node and a first device, wherein the network node is configured to control the first device to send second channel state information of a second link to the network node via a first link, wherein the first link is a cellular communication link from the first device to the network node, and the second link is a Device-to-Device communication link between the first device and a second device capable of communicating with the first device.
